# EUROPÄISCHE PATENTSCHRIFT

(11) **EP 3 381 109 B1**
(45) Veröffentlichungstag und Bekanntmachung des Hinweises auf die Patenterteilung: **09.03.2022**
(21) Anmeldenummer: 16700905.9
(22) Anmeldetag: 19.01.2016
(51) Int. Cl.: H02M 1/084, H02M 7/483, G08C 23/06

(54) **MULTILEVELUMRICHTER**
MULTILEVEL CONVERTER
ONDULEUR MULTINIVEAUX

(43) Veröffentlichungstag der Anmeldung: 03.10.2018
(73) Patentinhaber: Siemens Energy Global GmbH & Co. KG, 81739 München (DE)
(72) Erfinder: ALVAREZ VALENZUELA, Rodrigo Alonso, 90419 Nürnberg (DE); DORN, Jörg, 96155 Buttenheim (DE); ERGIN, Dominik, 91083 Baiersdorf (DE); GAMBACH, Herbert, 91080 Uttenreuth (DE); PIESCHEL, Martin, 90473 Nürnberg (DE); SCHREMMER, Frank, 90768 Fürth (DE)
(86) Internationale Anmeldenummer: PCT/EP2016/050956
(87) Internationale Veröffentlichungsnummer: WO 2017/125132

(56) Entgegenhaltungen:
- EP-A1- 2 854 282
- EP-A1- 2 905 889
- WO-A1-2011/120572
- WO-A1-2013/178249
- DE-A1-102005 041 087

## Beschreibung

Die Erfindung betrifft einen modularen Multilevelumrichter mit einer Vielzahl von Submodulen, welche jeweils mindestens zwei elektronische Schaltelemente und einen elektrischen Energiespeicher aufweisen.

Umrichter sind leistungselektronische Schaltungen zum Umwandeln von elektrischer Energie. Mit Umrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Umrichter können eine Vielzahl von gleichartigen Modulen (sogenannte Submodule) aufweisen, welche elektrisch in Reihe geschaltet sind. Diese Submodule weisen jeweils mindestens zwei elektronische Schaltelemente und einen elektrischen Energiespeicher auf. Solche Umrichter werden als modulare Multilevelumrichter bezeichnet. Durch die elektrische Reihenschaltung der Submodule lassen sich hohe Ausgangsspannungen erreichen. Die Umrichter sind einfach an unterschiedliche Spannungen anpassbar (skalierbar) und eine gewünschte Ausgangsspannung kann relativ genau erzeugt werden. Modulare Multilevelumrichter werden oftmals im Hochspannungsbereich eingesetzt, beispielsweise als Umrichter bei Hochspannungs-Gleichstrom-Übertragungsanlagen oder als Blindleistungskompensatoren bei flexiblen Drehstromübertragungssystemen.

Zur Ansteuerung der in den Submodulen enthaltenen elektronischen Schaltelemente und zur Rückmeldung von Zuständen der Submodule (beispielsweise zur Rückmeldung des Ladezustandes des Energiespeichers des Submoduls) werden Signale zwischen einer zentralen Steuereinrichtung und den Submodulen ausgetauscht. Aus Gründen der einfachen und kostengünstigen Realisierbarkeit ist es wünschenswert, die Steuereinrichtung auf Erdpotenzial anzuordnen, wohingegen die einzelnen Submodule sich auf unterschiedlichen Spannungspotenzialen (unter anderem auch auf Hochspannungspotenzialen) befinden können. Daher erfolgt die Signalübertragung zwischen der Steuereinrichtung und den Submodulen häufig mittels Lichtwellenleiter; es werden optische Signale verwendet.

Dabei ist es denkbar, von der zentralen Steuereinrichtung einen Lichtwellenleiter zu jedem Submodul zu verlegen (um Signale von der Steuereinrichtung zu dem Submodul zu übertragen) und einen weiteren Lichtwellenleiter von dem Submodul zu der Steuereinrichtung zu verlegen (um Signale von dem Submodul zu der Steuereinrichtung zu übertragen). Bei dieser Lösung werden also je Submodul zwei Lichtwellenleiter benötigt, welche sich von dem Submodul zu der Steuereinrichtung erstrecken. Da sich die Steuereinrichtung in einer beträchtlichen Entfernung zu dem jeweiligen Submodul befinden kann (beispielsweise können solche Entfernungen 100 m und mehr betragen), werden erhebliche Längen von Lichtwellenleitern benötigt und es fallen beträchtliche Kosten für diese Lichtwellenleiter sowie für deren Verlegung an.

Aus der europäischen Patentanmeldung EP 2 905 889 A1 ist ein modularer Multilevelumrichter bekannt, bei dem Steuersignale von einer zentralen Steuereinrichtung mittels mehrerer zwischengeschalteter Steuergeräte zu Submodulen des Umrichters übertragen werden. Dabei sind die zwischengeschalteten Steuergeräte in Serie geschaltet und jeweils als eine elektronische Schaltung mit umfangreichen Möglichkeiten der Signalverarbeitung ausgestaltet.

Die internationale Patentanmeldung WO 2013/178249 A1 offenbart einen Umrichter, bei dem zur Reduzierung der Länge der Lichtwellenleiter optische Koppler eingesetzt werden, die ein optisches Eingangssignal in mindestens zwei optische Ausgangssignale aufteilen.

Die deutsche Offenlegungsschrift DE 10 2005 041 087 A1 offenbart verschiedene Submodule für einen modularen Umrichter.

Aus der internationalen Patentanmeldung WO 2011/120572 A1 ist ein Voltage Source Converter bekannt, der Slave-Zellen aufweist. Nachrichten werden über einen Control Hub zu diesen Slave-Zellen übertragen.

Die europäische Patentanmeldung EP 2 854 282 A1 offenbart einen modularen Multilevelumrichter mit einer Vielzahl von Submodulen. Eine Steuereinrichtung ist über Lichtwellenleiter und einen optischen Splitter mit den Submodulen verbunden. Dabei können die Submodule anhand der Laufzeit der Signale durch die Lichtwellenleiter identifiziert werden.

Der Erfindung liegt die Aufgabe zugrunde, einen Umrichter und ein Verfahren anzugeben, mit denen die Übertragung von Signalen zwischen der Steuereinrichtung und den Submodulen kostengünstig realisiert werden kann.

Diese Aufgabe wird erfindungsgemäß gelöst durch einen Umrichter und durch ein Verfahren nach den unabhängigen Patentansprüchen. Vorteilhafte Ausführungsformen des Umrichters und des Verfahrens sind in den jeweiligen abhängigen Patentansprüchen angegeben.

Offenbart wird ein modularer Multilevelumrichter mit einer Vielzahl von Submodulen, welche jeweils mindestens zwei elektronische Schaltelemente und einen elektrischen Energiespeicher aufweisen, und mit einer Steuereinrichtung für die Submodule, wobei ein optischer Ausgang der Steuereinrichtung mittels eines ersten Lichtwellenleiters mit einem Eingang eines optischen Verteilers verbunden ist und eine Vielzahl von Ausgängen des optischen Verteilers mittels jeweils eines zweiten Lichtwellenleiters mit einem optischen Eingang jeweils eines der Submodule verbunden sind. Der optische Verteiler ist ein passiver optischer Verteiler.

Bei diesem modularen Multilevelumrichter ist vorteilhaft, dass zwischen der Steuereinrichtung und dem optischen Verteiler lediglich der erste Lichtwellenleiter benötigt wird, und dass nur zwischen dem optischen Verteiler und den Submodulen jeweils ein eigener Lichtwellenleiter (der hier als "zweiter Lichtwellenleiter" bezeichnet wird) benötigt wird. Je nach Abstand zwischen der Steuereinrichtung und dem optischen Verteiler lassen sich daher beträchtliche Längen an Lichtwellenleitern einsparen, dadurch kann der Multilevelumrichter kostengünstig realisiert werden. Der optische Verteiler kann hierbei ein passiver optischer Verteiler sein, das heißt, der optische Verteiler benötigt keine Hilfsenergie (hilfsenergiefreier optischer Verteiler). Dadurch kann der optische Verteile ohne Weiteres auf Hochspannungspotenzial angeordnet sein, ohne dass eine (aufgrund des Hochspannungspotenzials) kostenaufwendige Hilfsenergieversorgung für diesen optischen Verteiler benötigt wird. Der optische Verteiler verteilt die an seinem optischen Eingang eintreffenden optischen Steuersignale auf seine (sämtlichen) optischen Ausgänge.

Der Multilevelumrichter kann so ausgestaltet sein, dass die Ausgänge des optischen Verteilers (mittels des jeweiligen zweiten Lichtwellenleiters) jeweils mit einem anderen der Submodule verbunden sind. Bei dieser Ausführungsform ist jedem Submodul genau ein Ausgang des optischen Verteilers zugeordnet; jedes Submodul ist mittels genau eines der zweiten Lichtwellenleiter mit dem zugeordneten optischen Ausgang des optischen Verteilers verbunden.

Der Multilevelumrichter ist so ausgestaltet, dass - die Steuereinrichtung eine Vielzahl von optischen Eingängen aufweist, und ein optischer Ausgang der Submodule jeweils mittels eines dritten Lichtwellenleiters mit einem der optischen Eingänge der Steuereinrichtung verbunden ist.

Dabei ist der optische Ausgang der einzelnen Submodule mittels jeweils eines dritten Lichtwellenleiters unmittelbar mit den optischen Eingängen der Steuereinrichtung verbunden. Daher ist kein weiteres optisches Bauteil (insbesondere kein optischer Sammler) notwendig.

Alternativ kann der Multilevelumrichter so ausgestaltet sein, dass
- ein optischer Sammler eine Vielzahl von optischen Eingängen aufweist, und ein optischer Ausgang der Submodule jeweils mittels eines dritten Lichtwellenleiters mit einem der optischen Eingänge des optischen Sammlers verbunden ist, und ein optischer Ausgang des optischen Sammlers mittels eines vierten Lichtwellenleiters mit einem optischen Eingang der Steuereinrichtung verbunden ist. Dies ist nicht beansprucht.

Bei dieser alternativen Ausführungsform ist zwischen den Ausgängen der Submodule und dem Eingang der Steuereinrichtung ein optischer Sammler angeordnet. Durch den Einsatz dieses optischen Sammlers kann eine weitere Verringerung der benötigten Lichtwellenleiterlänge erreicht werden: zwischen dem optischen Ausgang des optischen Sammlers und dem optischen Eingang der Steuereinrichtung ist nämlich nur ein einziger Lichtwellenleiter (der vierte Lichtwellenleiter) notwendig. In Abhängigkeit vom räumlichen Abstand zwischen der Steuereinrichtung und dem optischen Sammler lassen sich hierdurch zusätzlich bedeutende Längen an Lichtwellenleitern einsparen. Der optische Sammler kann hierbei ein passiver optischer Sammler sein, das heißt, der optische Sammler benötigt keine Hilfsenergie (hilfsenergiefreier optischer Sammler). Dadurch kann der optische Sammler ohne Weiteres auf Hochspannungspotenzial angeordnet sein, ohne dass eine (aufgrund des Hochspannungspotenzials) kostenaufwendige Hilfsenergieversorgung für den optischen Sammler benötigt wird. Der optische Sammler führt die an (allen) seinen optischen Eingängen eintreffenden optischen Signale an seinem optischen Ausgang zusammen.

Der modulare Multilevelumrichter ist so ausgestaltet, dass die Ausgänge der Submodule (mittels des jeweiligen dritten Lichtwellenleiters) jeweils mit einem anderen der optischen Eingänge der Steuereinrichtung verbunden sind. Dabei ist dem Ausgang der einzelnen Submodule jeweils ein Eingang der Steuereinrichtung zugeordnet. Der Ausgang der einzelnen Submodule ist mittels des jeweiligen dritten Lichtwellenleiters mit diesem zugeordneten Eingang der Steuereinrichtung optisch verbunden.

Der Multilevelumrichter kann aber auch so ausgestaltet sein, dass die Ausgänge der Submodule (mittels des jeweiligen dritten Lichtwellenleiters) jeweils mit einem anderen der optischen Eingänge des optischen Sammlers verbunden sind. Bei dieser Ausführungsform ist dem Ausgang der einzelnen Submodule jeweils ein Eingang des optischen Sammlers zugeordnet. Der Ausgang der einzelnen Submodule ist mittels des jeweiligen dritten Lichtwellenleiters mit dem zugeordneten optischen Eingang des optischen Sammlers optisch verbunden. Dies ist nicht beansprucht und macht daher kein Teil der Erfindung.

Der Multilevelumrichter kann auch so ausgestaltet sein, dass der Multilevelumrichter einen weiteren Lichtwellenleiter aufweist, der einen weiteren optischen Ausgang der Steuereinrichtung mit einem weiteren optischen Eingang des optischen Verteilers verbindet. Dabei sind der weitere Lichtwellenleiter und der erste Lichtwellenleiter optisch parallel geschaltet. Der weitere Lichtwellenleiter ist redundant und erhöht die Ansfallsicherheit des Multilevelumrichters. Bei einer Unterbrechung des ersten Lichtwellenleiters können nämlich optische Steuersignale von der Steuereinrichtung über den weiteren Lichtwellenleiter zu dem optischen Verteiler übertragen werden.

Der Multilevelumrichter kann auch so ausgestaltet sein, dass der Multilevelumrichter einen zusätzlichen Lichtwellenleiter aufweist, der einen zusätzlichen optischen Ausgang des optischen Sammlers mit einem zusätzlichen optischen Eingang der Steuereinrichtung verbindet Der zusätzliche Lichtwellenleiter und der vierte Lichtwellenleiter sind optisch parallel geschaltet. Der zusätzliche Lichtwellenleiter ist redundant und erhöht die Ausfallsicherheit des Multilevelumrichters. Bei einem Ausfall des vierten Lichtwellenleiters können nämlich von den Submodulen stammende optische Antwortsignale über den zusätzlichen Lichtwellenleiter zu der Steuereinrichtung übertragen werden.

Der modulare Multilevelumrichter kann so ausgestaltet sein, dass die Abstände zwischen dem optischen Sammler und den Submodulen jeweils kleiner sind als der Abstand zwischen dem optischen Sammler und der Steuereinrichtung. Bei einem derart ausgestalteten Multilevelumrichter können erhebliche Lichtwellenleiterlängen und damit erhebliche Kosten eingespart werden. Allgemein gilt, dass die Einsparung umso größer ist, je größer der Abstand zwischen dem optischen Sammler und der Steuereinrichtung ist.

Der Multilevelumrichter kann auch so ausgestaltet sein, dass die Abstände zwischen dem optischen Verteiler und den Submodulen jeweils kleiner sind als der Abstand zwischen dem optischen Verteiler und der Steuereinrichtung. Bei dieser Ausführungsform des Multilevelumrichters können ebenfalls erhebliche Lichtwellenleiterlängen und damit erhebliche Kosten eingespart werden.

Offenbart wird weiterhin ein Verfahren zum Übertragen von optischen Signalen zwischen einer Steuereinrichtung und Submodulen eines modularen Multilevelumrichters, wobei die Submodule jeweils mindestens zwei elektronischen Schaltelemente und einen elektrischen Energiespeicher aufweisen, wobei
- von einem optischen Ausgang der Steuereinrichtung optische Steuersignale mittels eines ersten Lichtwellenleiters zu einem Eingang eines optischen Verteilers übertragen werden, und
- von einer Vielzahl von Ausgängen des optischen Verteilers die optischen Steuersignale mittels jeweils eines zweiten Lichtwellenleiters zu einem optischen Eingang jeweils eines der Submodule übertragen werden. Der optische Verteiler ist ein passiver optischer Verteiler.

Dieses Verfahren kann so ausgestaltet sein, dass die optischen Steuersignale von den Ausgängen des optischen Verteilers (mittels des jeweiligen zweiten Lichtwellenleiters) jeweils zu einem anderen der Submodule übertragen werden.

Das Verfahren ist so ausgestaltet, dass
- die Steuereinrichtung eine Vielzahl von optischen Eingängen aufweist, und von einem optischen Ausgang der Submodule optische Antwortsignale jeweils mittels eines dritten Lichtwellenleiters zu einem der optischen Eingänge der Steuereinrichtung übertragen werden.

Alternativ kann das Verfahren so ausgestaltet sein, dass
- ein optischer Sammler eine Vielzahl von optischen Eingängen aufweist, und von einem optischen Ausgang der Submodule optische Antwortsignale jeweils mittels eines dritten Lichtwellenleiters zu einem der optischen Eingänge des optischen Sammlers übertragen werden, und von einem optischen Ausgang des optischen Sammlers die optischen Antwortsignale mittels eines vierten Lichtwellenleiters zu einem optischen Eingang der Steuereinrichtung übertragen werden. Dies ist nicht beansprucht.

Das Verfahren ist so ausgestaltet, dass die optischen Antwortsignale von dem optischen Ausgang der Submodule (mittels des jeweiligen dritten Lichtwellenleiters) jeweils zu einem anderen der optischen Eingänge der Steuereinrichtung übertragen werden.

Das Verfahren kann auch so ausgestaltet sein, dass die optischen Steuersignale von einem weiteren optischen Ausgang der Steuereinrichtung mittels eines fünften Lichtwellenleiters zu einem weiteren optischen Eingang des optischen Verteilers übertragen werden. Die optischen Steuersignale werden dabei auf zwei unabhängigen optischen Übertragungswegen von der Steuereinrichtung zu dem optischen Verteiler übertragen. Der fünfte Lichtwellenleiter ist redundant und erhöht die Ausfallsicherheit des Multilevelumrichters.

Das Verfahren kann so ausgestaltet sein, dass die optischen Antwortsignale von einem zusätzlichen optischen Ausgang des Sammlers mittels eines zusätzlichen Lichtwellenleiters zu einem zusätzlichen optischen Eingang der Steuereinrichtung übertragen werden. Die optischen Antwortsignale werden dabei auf zwei unabhängigen optischen Übertragungswegen von dem optischen Sammler zu der Steuereinrichtung übertragen. Der zusätzliche Lichtwellenleiter ist redundant und erhöht die Ausfallsicherheit des Multilevelumrichters.

Das Verfahren kann so ausgestaltet sein, dass die Abstände zwischen dem optischen Sammler und den Submodulen jeweils kleiner sind als der Abstand zwischen dem optischen Sammler und der Steuereinrichtung.

Das Verfahren kann auch so ausgestaltet sein, dass die Abstände zwischen dem optischen Verteiler und den Submodulen jeweils kleiner sind als der Abstand zwischen dem optischen Verteiler und der Steuereinrichtung.

Die genannten Ausführungsformen des Verfahrens weisen gleichartige Vorteile auf, wie sie oben im Zusammenhang mit dem modularen Multilevelumrichter angegeben sind.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines modularen Multilevelumrichters, in
- Figur 2: ein Ausführungsbeispiel eines Submoduls, in
- Figur 3: ein weiteres Ausführungsbeispiel eines Submoduls, in
- Figur 4: ein Ausführungsbeispiel eines Multilevelumrichters mit einem optischen Verteiler, in
- Figur 5: ein nicht beanspruchtes Ausführungsbeispiel eines Multilevelumrichters mit einem optischen Verteiler und einem optischen Sammler, in
- Figur 6: ein beispielhafter Verfahrensablauf und in
- Figur 7: ein nicht beanspruchter weiterer beispielhafter Verfahrensablauf
dargestellt.

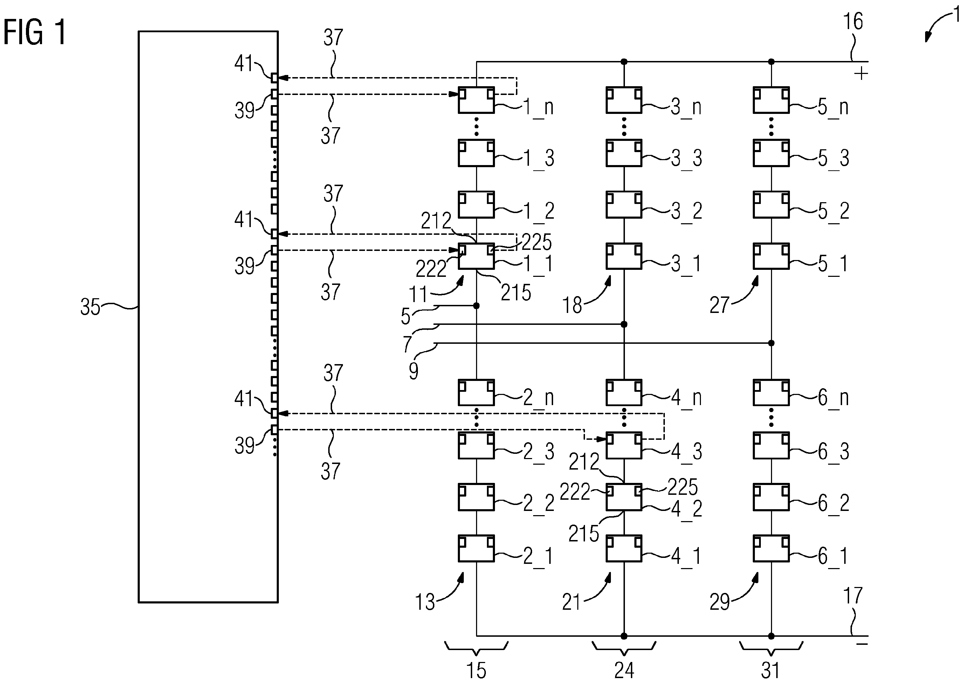

In Figur 1 ist ein Umrichter 1 in Form eines modularen Multilevelumrichters 1 (modular multilevel converter, MMC) dargestellt. Dieser Multilevelumrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Umrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Submodulen (1_1, 1_2, 1_3, ... 1_n; 2_1 ... 2_n; usw.) auf, welche (mittels ihrer galvanischen Stromanschlüsse) elektrisch in Reihe geschaltet sind. Im Ausführungsbeispiel der Figur 1 weist jeder Phasenmodulzweig n Submodule auf. Die Anzahl der (mittels ihrer galvanischen Stromanschlüsse) elektrisch in Reihe geschalteten Submodule kann sehr verschieden sein, mindestens sind zwei Submodule in Reihe geschaltet, es können aber auch beispielsweise 50 oder 100 Submodule elektrisch in Reihe geschaltet sein. Im Ausführungsbeispiel ist n = 32: der erste Phasenmodulzweig weist also 36 Submodule 1_1, 1_2, 1_3, ... 1_32 auf.

Im linken Bereich der Figur 1 ist schematisch eine Steuereinrichtung 35 für die Submodule 1_1 bis 6_n dargestellt. Von dieser zentralen Steuereinrichtung 35 werden optische Signale zu den einzelnen Submodulen übertragen. Die Signalübertragung zwischen der Steuereinrichtung und einem Submodul ist jeweils symbolhaft durch eine gestrichelte Linie 37 dargestellt; die Richtung der Signalübertragung ist durch die Pfeilspitze an den gestrichelten Linien 37 symbolisiert. Die Steuereinrichtung 35 sendet mittels optischer Ausgänge 39 optische Signale an die Submodule ab und empfängt optische Signale von den einzelnen Submodulen mittels optischer Eingänge 41. Dies ist am Beispiel der Submodule 1_1, 1_n und 4_3 dargestellt; zu den anderen Submodulen werden auf die gleiche Art und Weise optische Signale gesendet bzw. von diesen Submodulen empfangen. Nach der Darstellung der Figur 1 werden also pro Submodul zwei Lichtwellenleiter benötigt, die sich jeweils zwischen dem Submodul und der Steuereinrichtung erstrecken. Dies ist die eingangs beschriebene teure Lösung mit großen benötigten Lichtwellenleiterlängen. Im Unterschied dazu wird im Folgenden eine andere Lösung beschrieben, bei der kleinere Lichtwellenleiterlängen ausreichend sind.

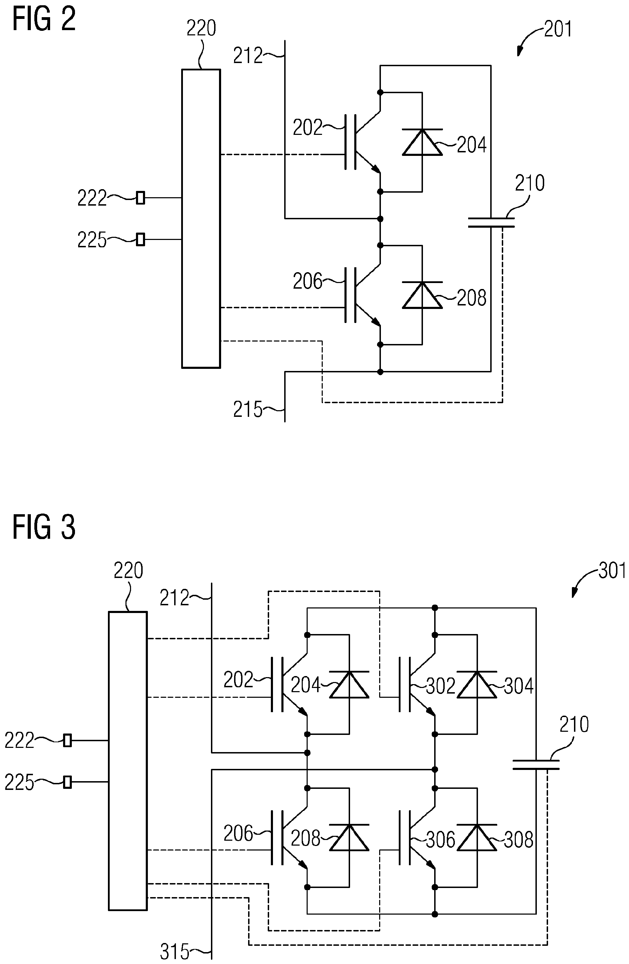

In Figur 2 ist beispielhaft der prinzipielle Aufbau eines Submoduls 201 dargestellt. Dabei kann es sich beispielsweise um das Submodul 1_1 des ersten Phasenmodulzweigs 11 (oder auch um eines der anderen in Figur 1 dargestellten Submodule) handeln. Das Submodul ist als ein Halbbrückenmodul 201 ausgestaltet. Das Submodul 201 weist ein erstes abschaltbares Halbleiterventil 202 mit einer ersten antiparallel geschalteten Diode 204 auf. Weiterhin weist das Submodul 201 ein zweites abschaltbares Halbleiterventil 206 mit einer zweiten antiparallel geschalteten Diode 208 sowie einen elektrischen Energiespeicher 210 in Form eines Kondensators 210 auf. Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 sind jeweils als ein IGBT (insulated-gate bipolar transistor) ausgestaltet. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen ist ein erster galvanischer Submodulanschluss 212 angeordnet. An dem Anschluss des zweiten Halbleiterventils 206, welcher dem Verbindungspunkt gegenüberliegt, ist ein zweiter galvanischer Submodulanschluss 215 angeordnet. Der zweite Submodulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 durch eine submodulinterne elektronische Ansteuerschaltung 220 kann erreicht werden, dass zwischen dem ersten galvanischen Submodulanschluss 212 und dem zweiten galvanischen Submodulanschluss 215 entweder die Spannung des Energiespeichers 210 ausgegeben wird oder keine Spannung ausgegeben wird (d.h. eine Nullspannung ausgegeben wird). Durch Zusammenwirken der Submodule der einzelnen Phasenmodulzweige kann so die jeweils gewünschte Ausgangsspannung des Umrichters erzeugt werden. Zur submodulexternen Kommunikation weist das Submodul 201 einen optischen Kommunikationseingang 222 und einen optischen Kommunikationsausgang 225 auf. Der optische Kommunikationseingang 222 und der optische Kommunikationsausgang 225 sind mit der Ansteuerschaltung 220 verbunden. An den optischen Kommunikationseingang 222 und den optischen Kommunikationsausgang 225 werden zur submodulexternen Kommunikation jeweils Lichtwellenleiter angeschlossen. Weiterhin kann die Ansteuerschaltung 220 auch Zustände des Submoduls erfassen und an die zentrale Steuereinrichtung 35 melden. In Figur 2 ist beispielhaft mittels einer gestrichelten Linie angedeutet, dass die Ansteuerschaltung 220 den Ladezustand des Energiespeichers 210 erfasst und an die zentrale Steuereinrichtung 35 melden kann.

Der optische Kommunikationseingang 222 des Submoduls 201 leitet die an ihm eintreffenden optischen Signale (optische Nachrichten) zu der Ansteuerschaltung 220 weiter; die Ansteuerschaltung 220 gibt (veränderte oder unveränderte) optische Signale an dem optischen Kommunikationsausgang 225 des Submoduls aus.

In Figur 3 ist ein weiteres Ausführungsbeispiel eines Submoduls 301 dargestellt. Bei diesem Submodul 301 kann es sich beispielsweise um das Submodul 1_n (oder auch um eines der anderen in Figur 1 dargestellten Submodule) handeln. Neben dem bereits aus Figur 2 bekannten ersten Halbleiterventil 202, zweiten Halbleiterventil 206, erster Diode 204, zweiter Diode 208, Energiespeicher 210 und Ansteuerschaltung 220 weist das in Figur 3 dargestellte Submodul 301 ein drittes abschaltbares Halbleiterventil 302 mit einer antiparallel geschalteten dritten Diode 304 sowie ein viertes abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 sind jeweils als ein IGBT ausgestaltet. Im Unterschied zur Schaltung der Figur 2 ist der zweite galvanische Submodulanschluss 315 nicht mit dem zweiten Halbleiterventil 206 verbunden, sondern mit einem Mittelpunkt einer elektrischen Reihenschaltung aus dem dritten Halbleiterventil 302 und dem vierten Halbleiterventil 306.

Das Submodul 301 der Figur 3 ist ein sogenanntes Vollbrückenmodul 301. Dieses Vollbrückenmodul 301 zeichnet sich dadurch aus, dass bei entsprechender Ansteuerung der vier Halbleiterventile zwischen dem ersten galvanischen Submodulanschluss 212 und dem zweiten galvanischen Submodulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Umrichter 1 kann entweder nur Halbbrückenmodule 201, nur Vollbrückenmodule 301 oder auch Halbbrückenmodule 201 und Vollbrückenmodule 301 aufweisen.

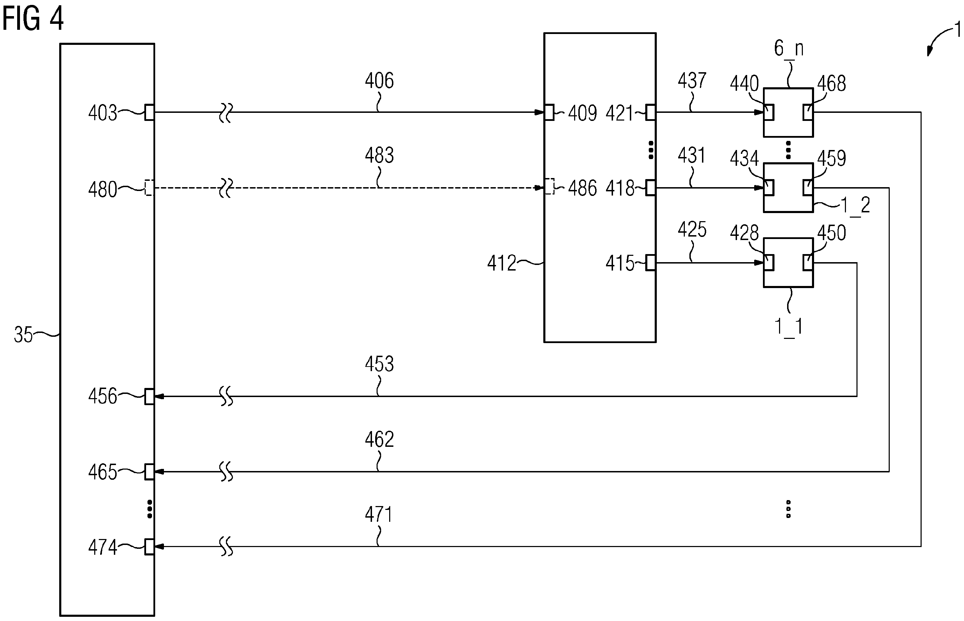

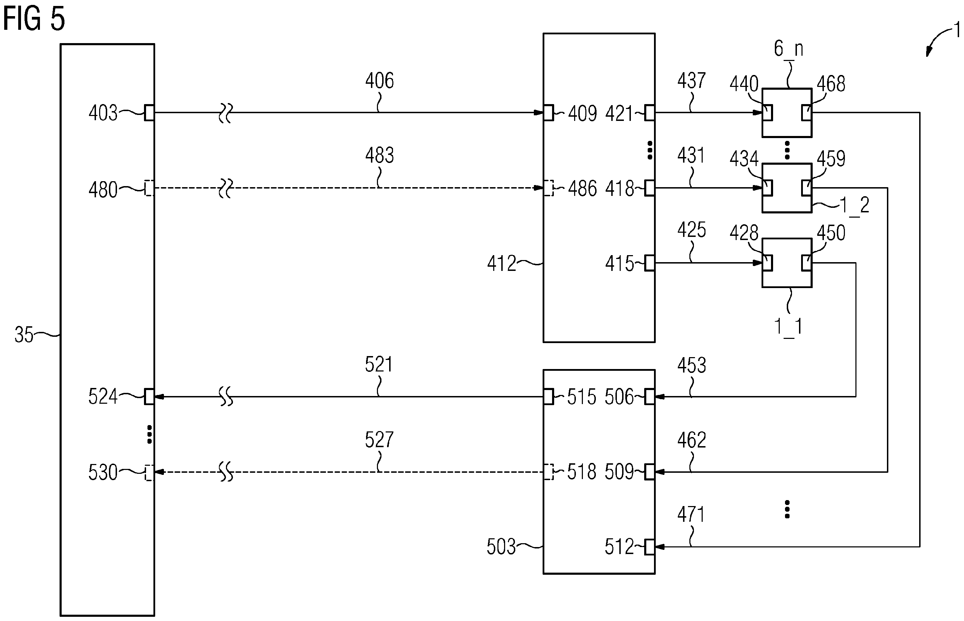

Die Darstellungen der Figuren 2 und 3 zeigen jeweils ein Submodul mit dem ersten galvanischen Submodulanschluss 212 und dem zweiten galvanischen Submodulanschluss 215 bzw. 315. Über den ersten galvanischen Submodulanschluss 212 und den zweiten galvanischen Submodulanschluss 215, 315 fließen große elektrische Ströme des Umrichters. Zusätzlich weist jedes Submodul die Ansteuerschaltung 220 auf, die insbesondere die Schaltelemente 202, 206, 302 und/oder 306 ansteuert. Diese Ansteuerschaltung 220 kommuniziert über den optischen Kommunikationseingang 222 und den optischen Kommunikationsausgang 225 mittels Lichtwellenleitern potentialgetrennt mit submodulexternen Einheiten (hier: beispielsweise mit einem optischen Verteiler 412 oder mit einem optischen Sammler 503, vgl. Figuren 4 und 5). Die Verschaltung/Verbindung des optischen Kommunikationseingangs 222 und des optischen Kommunikationsausgang 225 der einzelnen Submodule mittels Lichtwellenleitern wird im Folgenden beschrieben.

In Figur 4 sind von dem aus Figur 1 bekannten Multilevelumrichter 1 lediglich die Steuereinrichtung 35 sowie als Beispiel drei Submodule, nämlich ein erstes Submodul 1_1, ein zweites Submodul 1_2 und ein m-tes Submodul 6_n dargestellt. Alle weiteren Submodule des Multilevelumrichters 1 sind gleichartig wie diese drei beispielhaft dargestellten Submodule angeordnet.

Ein optischer Ausgang 403 der Steuereinrichtung 35 ist mittels eines ersten Lichtwellenleiters 406 mit einem optischen Eingang 409 eines optischen Verteilers 412 optisch verbunden. Der optische Verteiler 412 weist eine Vielzahl von optischen Ausgängen auf, von denen hier beispielhaft ein erster optischer Ausgang 415, ein zweiter optischer Ausgang 418 sowie ein m-ter optischer Ausgang 421 dargestellt sind. Der optische Verteiler 412 hat also m optische Ausgänge, wobei gilt: m = Anzahl der (anzusteuernden) Submodule des Multilevelumrichters = Anzahl der Ausgänge des optischen Verteilers, im Ausführungsbeispiel ist m = 6 * 32 = 192. Im Rahmen dieser Beschreibung wird die Zahl m auch als eine "Vielzahl" bezeichnet. In anderen Ausführungsbeispielen kann die Zahl m natürlich auch andere Werte annehmen. Beispielsweise kann die Zahl m zwischen 96 und 384 liegen.

Der optische Verteiler 412 ist ein passiver optischer Verteiler. Der optische Verteiler 412 verteilt die an seinem optischen Eingang eintreffenden optischen Steuersignale an seine sämtlichen optischen Ausgänge. Der erste optische Ausgang 415 ist mittels eines Lichtwellenleiters 425 mit einem ersten optischen Eingang 428 des ersten Submoduls 1_1 optisch verbunden. In gleicher Art und Weise ist der zweite optische Ausgang 418 des optischen Verteilers 412 mittels eines Lichtwellenleiters 431 mit einem zweiten optischen Eingang 434 des zweiten Submoduls 1_2 optisch verbunden. Ebenso ist der m-te optische Ausgang 421 mittels eines Lichtwellenleiters 437 mit einem m-ten optischen Eingang 440 des m-ten Submoduls 6_n optisch verbunden.

Die drei beispielhaft genannten Lichtwellenleiter 425, 431 und 437 werden im Rahmen dieser Beschreibung auch als "zweite Lichtwellenleiter" bezeichnet, sie bilden sozusagen eine zweite Gruppe von Lichtwellenleitern, nämlich die Lichtwellenleiter, die sich von den Ausgängen des optischen Verteilers 412 zu den Eingängen der Submodule erstrecken.

Ein erster optischer Ausgang 450 des ersten Submoduls 1_1 ist mittels eines Lichtwellenleiters 453 mit einem ersten optischen Eingang 456 der Steuereinrichtung 35 optisch verbunden. Ebenso ist zweiter optischer Ausgang 459 des zweiten Submoduls 1_2 mittels eines Lichtwellenleiters 462 mit einem zweiten optischen Eingang 465 der Steuereinrichtung 35 optisch verbunden. In gleicher Art und Weise ist der m-te optische Ausgang 468 des m-ten Submoduls 6_n mittels eines Lichtwellenleiters 471 mit einem m-ten optischen Eingang 474 der Steuereinrichtung 35 optisch verbunden.

Die Lichtwellenleiter 453, 462 und 471 werden im Rahmen dieser Beschreibung auch als "dritte Lichtwellenleiter" bezeichnet. Diese dritten Lichtwellenleiter bilden eine Gruppe von Lichtwellenleitern, die mit den optischen Ausgängen der einzelnen Submodule verbunden sind.

Der Multilevelumrichter 1 kann optional einen weiteren Lichtwellenleiter 483 aufweisen: ein (optionaler) weiterer optischer Ausgang 480 der Steuereinrichtung 35 wird mittels des weiteren Lichtwellenleiters 483 mit einem (optionalen) zweiten optischen Eingang 486 des optischen Verteilers 412 optisch verbunden. Der zweite optische Eingang 486 wird im Folgenden auch als ein (optionaler) weiterer optischer Eingang 486 des optischen Verteilers 412 bezeichnet. Der weitere Lichtwellenleiter 483 ist optional, das heißt, der weitere Lichtwellenleiter 483 kann in anderen Ausführungsbeispielen auch weggelassen werden. Deshalb ist der weitere Lichtwellenleiter 483 mittels einer gepunkteten Linie dargestellt.

Der weitere Lichtwellenleiter 483 ist redundant und dient dazu, bei einem eventuellen Ausfall des ersten Lichtwellenleiters 406 die optische Signalübertragung zwischen der Steuereinrichtung 35 und dem optischen Verteiler 412 zu gewährleisten. Das heißt, bei einem Ausfall des ersten Lichtwellenleiter 406 werden über den weiteren Lichtwellenleiter 483 dieselben optischen Signale übertragen, die zuvor über den ersten Lichtwellenleiter 406 übertragen worden sind.

In Figur 5 ist ein weiteres Ausführungsbeispiel eines modularen Multilevelumrichters 1 dargestellt. Dieses Ausführungsbeispiel unterscheidet sich vom Ausführungsbeispiel der Figur 4 dadurch, dass zwischen den Ausgängen der Submodule und der Steuereinrichtung ein optischer Sammler 503 angeordnet ist. Von diesem optischen Sammler 503 sind beispielhaft ein erster optischer Eingang 506, ein zweiter optischer Eingang 509 sowie ein m-ter optischer Eingang 512 dargestellt. Weiterhin weist der optische Sammler 503 einen ersten optischen Ausgang 515 auf. Der optische Sammler 503 ist ein passiver optischer Sammler. Der optische Sammler 503 führt die an seinen sämtlichen optischen Eingängen eintreffenden optischen Antwortsignale an seinem ersten optischen Ausgang 515 zusammen.

Optional weist der optische Sammler 503 einen zweiten optischen Ausgang 518 auf. Der zweite optische Ausgang 518 wird im Folgenden auch als ein (optionaler) zusätzlicher optischer Ausgang 518 bezeichnet.

Der Lichtwellenleiter 453 verbindet den ersten optischen Ausgang 450 des ersten Submoduls 1_1 optisch mit dem ersten optischen Eingang 506 des optischen Sammlers 503. Ebenso verbindet der Lichtwellenleiter 462 den zweiten optischen Ausgang 459 des zweiten Submoduls 1_2 mit dem zweiten optischen Eingang 509 des optischen Sammlers 503. In gleicher Weise verbindet der Lichtwellenleiter 471 den m-ten optischen Ausgang 468 des m-ten Submoduls 6_n mit dem m-ten optischen Eingang 512 des optischen Sammlers 503.

Der erste optische Ausgang 515 des optischen Sammlers 503 ist mittels eines vierten Lichtwellenleiters 521 mit einem ersten optischen Eingang 524 der Steuereinrichtung 35 optisch verbunden. Der erste optische Eingang 524 unterscheidet sich von dem ersten optischen Eingang 456 des Ausführungsbeispiel der Figur 4, da der erste optische Eingang 524 derart eingerichtet ist, dass er die Antwortsignale sämtlicher Submodule empfangen kann (und nicht nur das Antwortsignal des Submoduls 1_1 wie beim Ausführungsbeispiel der Figur 4).

Der zusätzliche optische Ausgang 518 des optischen Sammlers 503 ist mittels eines zusätzlichen Lichtwellenleiters 527 mit einem (optionalen) zusätzlichen optischen Eingang 530 der Steuereinrichtung 35 optisch verbunden. Der zusätzliche Lichtwellenleiter 527 ist optional, das heißt, er kann in anderen Ausführungsbeispielen auch weggelassen werden. Deshalb ist der zusätzliche Lichtwellenleiter 527 mittels einer gepunkteten Linie dargestellt. Falls der vierte Lichtwellenleiter 521 unterbrochen wird, dann werden die Antwortsignale vom optischen Sammler 503 über den zusätzlichen Lichtwellenleiter 527 zu der Steuereinrichtung 35 übertragen. Über den zusätzlichen Lichtwellenleiter 527 werden also bei einem Ausfall des vierten Lichtwellenleiter 521 dieselben optischen Signale übertragen, die ansonsten über den vierten Lichtwellenleiter 521 übertragen worden wären.

Wie in den Figuren 4 und 5 angedeutet ist, sind vorteilhafter Weise die Abstände zwischen dem optischen Verteiler 412 und den Submodulen 1_1, 1_2 bis 6_n jeweils kleiner als der Abstand zwischen dem optischen Verteiler 412 und der Steuereinrichtung 35. Wie in Figur 5 angedeutet ist, sind ebenso die Abstände zwischen dem optischen Sammler 503 und den Submodulen 1_1, 1_2 bis 6_n jeweils kleiner als der Abstand zwischen dem optischen Sammler 503 und der Steuereinrichtung 35. Dadurch fällt die Einsparung von Lichtwellenleitern besonders deutlich aus.

Das beschriebene Verfahren läuft dabei im Detail wie folgt ab: jedem Submodul 1_1, 1_2 bis 6_n ist eine eigene Adresse, insbesondere eine eineindeutige Adresse, zugeordnet. Eine solche Adresse ist beispielsweise eine individuelle Ziffernfolge oder Zeichenfolge. Die Adresszuordnung (Adresszuweisung) kann dabei beispielsweise mittels einer der beiden nachfolgend dargestellten Varianten erfolgen:
Variante 1:
   Jedes Submodul weist einen Kodierstecker auf, in dem die Adresse gespeichert ist. Wenn also beispielsweise 24 Submodule an dem optischen Verteiler 412 angeschlossen sind, dann gibt es 24 verschiedene Kodierstecker mit 24 verschiedenen Adressen.
Variante 2:
   In jedem Submodul ist hardwareseitig eine Adresse fest implementiert. Die Adresse kann dabei beispielsweise eine Art "Submodulnummer" sein, die in einem Speicherbaustein des Submoduls abgespeichert ist.

Diese Adressen können von der Steuereinrichtung 35 zu Verfahrensbeginn abgefragt werden. Dies ist beispielsweise über eine Abfragenachricht möglich, die ähnlich dem (aus der Internet-Kommunikation bekannten) Befehl "ping" realisiert sein kann. Mittels dieser Abfrage kann optional auch erkannt werden, welches Submodul an welchem Einbauort des Umrichters eingebaut ist: bei dem Ausführungsbeispiel nach Figur 4 lässt sich der Einbauort anhand des optischen Eingangs der Steuereinrichtung 35 erkennen, an dem die jeweilige Adresse empfangen wird.

Die Steuereinrichtung sendet optische Steuersignale zu den einzelnen Submodulen, die Submodule senden optische Antwortsignale zu der Steuereinrichtung. Sowohl die optischen Steuersignale als auch die optischen Antwortsignale können dabei als kodierte optische Telegramme ausgestaltet sein. Die optischen Steuersignale werden von dem optischen Verteiler 412 an alle Submodule des Umrichters verteilt. In jedem Steuersignal (bzw. in jedem Telegramm) ist jeweils die Adresse des Submoduls angegeben, an das das Steuersignal gerichtet ist. Jedes Submodule sucht sich anhand der in den Steuersignalen enthaltenen Adressen diejenigen Steuersignale heraus, die an es gerichtet sind. Die anderen Steuersignale werden von diesem Submodul ignoriert.

Als eine Option ist es möglich, Steuersignale an alle Submodule des Multilevelumrichters zu senden. Zu diesem Zweck kann eine spezielle Sammeladresse eingerichtet werden, auf die alle Submodule reagieren.

Ebenso sind alle optischen Antwortsignale mit der Adresse des jeweiligen Submoduls versehen, von dem das jeweilige Antwortsignal abgesendet worden ist. Dies ist insbesondere bei dem Ausführungsbeispiel der Figur 5 wichtig, weil die Steuereinrichtung 35 anhand der in den Antwortsignalen enthaltenen Adressen erkennen kann, von welchem Submodul das Antwortsignal stammt. Bei Ausführungsbeispiel der Figur 4 kann auf die Adresse in den Antwortsignalen auch verzichtet werden, weil die Steuereinrichtung anhand des optischen Eingangs (an dem das Antwortsignal eintrifft) erkennen kann, von welchem Submodul dieses Antwortsignal stammt.

Beim Ausführungsbeispiel der Figur 5 muss darüber hinaus sichergestellt werden, dass die einzelnen Submodule nicht gleichzeitig Antwortsignale an die Steuereinrichtung absenden. Gleichzeitig abgesendete Antwortsignale würden sich nämlich im optischen Sammler 35 überlagern und wären dann für die Steuereinrichtung 35 nicht mehr lesbar. Ein gleichzeitiges Absenden von Antwortsignalen durch die Submodule kann beispielsweise dadurch verhindert werden, dass die Submodule nur unmittelbar nach Empfang eines Steuersignals von der Steuereinrichtung auf dieses Steuersignal antworten. Durch zeitversetztes Absenden von Steuersignalen für die einzelnen Submodule kann erreicht werden, dass die Submodule auch jeweils zeitversetzt Antwortsignale absenden.

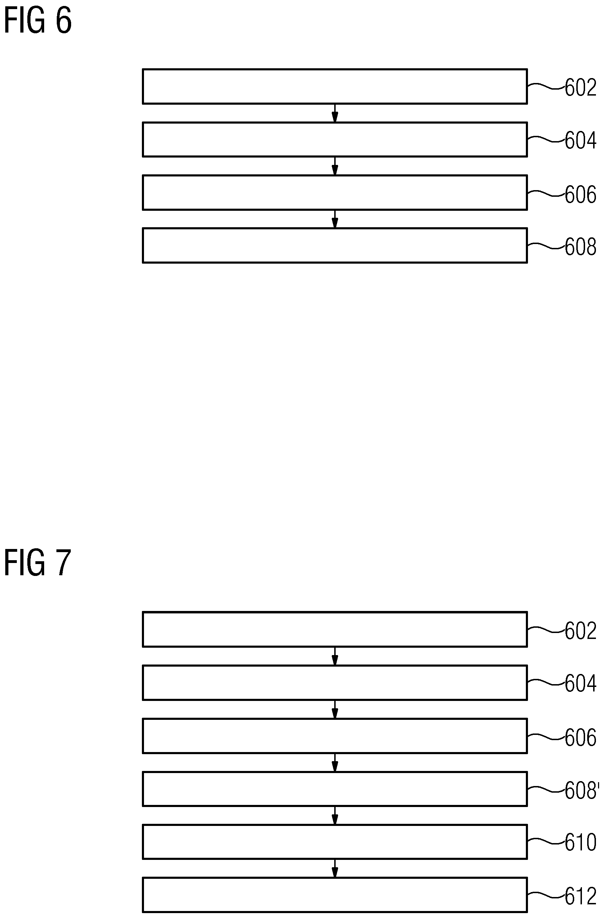

In Figur 6 ist eine Übersicht eines ersten beispielhaften Verfahrensablaufs dargestellt. Dieser Verfahrensablauf betrifft das Ausführungsbeispiel der Figur 4.

Verfahrensschritt 602: Die Steuereinrichtung 35 sendet ein Steuersignal ab, das an eines der Submodule adressiert ist, zum Beispiel an das Submodul 1_2. Das Steuersignal enthält die Adresse dieses Submoduls, zum Beispiel die Adresse des Submoduls 1_2.

Verfahrensschritt 604: Das Steuersignal gelangt über den ersten Lichtwellenleiter 406 zu dem optischen Verteiler 412. Der optische Verteiler 412 verteilt das Steuersignal über die zweiten Lichtwellenleiter 425, 431, 437 an alle (an dem optischen Verteiler angeschlossenen) Submodule.

Verfahrensschritt 606: Das adressierte Submodul (hier: das Submodul 1_2) erkennt anhand der in dem Steuersignal enthaltenen Adresse, dass das Steuersignal an es gerichtet ist, d.h. dass es von dem Steuersignal betroffen ist.

Verfahrensschritt 608: Das Submodul (hier: das Submodul 1_2) reagiert auf das Steuersignal (indem beispielsweise eines oder mehrere der elektronischen Schaltelemente eingeschaltet werden) und sendet daraufhin ein Antwortsignal an die Steuereinrichtung 35 ab. Dieses Antwortsignal wird über den entsprechenden dritten Lichtwellenleiter (hier: über den dritten Lichtwellenleiter 462) zu dem entsprechenden optischen Eingang (hier: zu dem zweiten optischen Eingang 465) der Steuereinrichtung 35 übertragen.

In Figur 7 ist eine Übersicht eines zweiten beispielhaften Verfahrensablaufs dargestellt. Dieser Verfahrensablauf betrifft das Ausführungsbeispiel der Figur 5.

Die Verfahrensschritte 602, 604 und 606 sind identisch mit dem Ausführungsbeispiel der Figur 6.

Verfahrensschritt 608': Das Submodul (hier: das Submodul 1 2) reagiert auf das Steuersignal (indem beispielsweise eines oder mehrere der elektronischen Schaltelemente eingeschaltet werden) und sendet daraufhin ein Antwortsignal an die Steuereinrichtung 35 ab. Dieses Antwortsignal enthält die Adresse des Submoduls (hier: die Adresse des Submoduls 1_2). Dieses Antwortsignal wird über den entsprechenden dritten Lichtwellenleiter (hier: über den dritten Lichtwellenleiter 462) zu dem entsprechenden optischen Eingang (hier: zu dem zweiten optischen Eingang 509) des optischen Sammlers 503 übertragen.

Verfahrensschritt 610: Die Antwortsignale aller Submodule werden durch den optischen Sammler an dessen optischem Ausgang zusammengeführt. Im Ausführungsbeispiel wird das Antwortsignal des Submoduls 1_2 zu dem ersten optischen Ausgang 515 des optischen Sammlers 503 geleitet. Von diesem optischen Ausgang 515 des optischen Sammlers 503 wird das Antwortsignal über den vierten Lichtwellenleiter 521 zu dem ersten optischen Eingang 524 der Steuereinrichtung 35 geleitet.

Verfahrensschritt 612: Die Steuereinrichtung 35 erkennt anhand der in dem Antwortsignal enthaltenen Adresse, von welchem Submodul dieses Antwortsignal stammt. Im Beispiel erkennt die Steuereinrichtung 35 anhand der in dem Antwortsignal enthaltenen Adresse des Submoduls 1_2, dass das Antwortsignal von dem Submodul 1_2 stammt.

Es wurde ein Multilevelumrichter sowie ein Verfahren zum Übertragen von optischen Signalen beschrieben, mit denen die Anzahl der Lichtwellenleiter und damit auch die Gesamtlänge der Lichtwellenleiter deutlich reduziert werden kann. Dadurch ergeben sich zum einen eine beträchtliche Kostenreduzierung und zum anderen auch eine beträchtliche Platzersparnis (es brauchen weniger Lichtwellenleiter verlegt zu werden). Durch redundante Lichtwellenleiter lässt sich darüber hinaus die Zuverlässigkeit der Signalübertragung verbessern und dadurch die Verfügbarkeit des Multilevelumrichters erhöhen.

## Patentansprüche

1. Modularer Multilevelumrichter (1) mit einer Vielzahl von Submodulen (1_1, 1_2, 6_n), welche jeweils mindestens zwei elektronische Schaltelemente (202, 206) und einen elektrischen Energiespeicher (210) aufweisen, und mit einer Steuereinrichtung (35) für die Submodule, wobei ein optischer Ausgang (403) der Steuereinrichtung (35) mittels eines ersten Lichtwellenleiters (406) mit einem Eingang (409) eines passiven optischen Verteilers (412) verbunden ist und eine Vielzahl von Ausgängen (415, 418, 421) des passiven optischen Verteilers (412) mittels jeweils eines zweiten Lichtwellenleiters (425, 431, 437) mit einem optischen Eingang (428, 434, 440) jeweils eines der Submodule (1_1, 1_2, 6_n) verbunden sind, und
- die Steuereinrichtung (35) eine Vielzahl von optischen Eingängen (456, 465, 474) aufweist, und ein optischer Ausgang (450, 459, 468) der Submodule (1_1, 1_2, 6_n) jeweils mittels eines dritten Lichtwellenleiters (453, 462, 471) mit einem der optischen Eingänge (456, 465, 474) der Steuereinrichtung (35) verbunden ist, **dadurch gekennzeichnet, dass**
- die Ausgänge (450, 459, 468) der Submodule (1_1, 1_2, 6_n) jeweils mit einem anderen der optischen Eingänge (456, 465, 474) der Steuereinrichtung (35) verbunden sind.

2. Modularer Multilevelumrichter nach Anspruch 1,
**dadurch gekennzeichnet, dass**
- die Ausgänge (415, 418, 421) des optischen Verteilers (412) jeweils mit einem anderen der Submodule (1 1, 1 2, 6 n) verbunden sind.

3. Modularer Multilevelumrichter nach einem der vorhergehenden Ansprüche,
**dadurch gekennzeichnet, dass**
- der Multilevelumrichter einen weiteren Lichtwellenleiter (483) aufweist, der einen weiteren optischen Ausgang (480) der Steuereinrichtung (35) mit einem weiteren optischen Eingang (486) des optischen Verteilers (412) verbindet.

4. Modularer Multilevelumrichter nach einem der vorhergehenden Ansprüche,
**dadurch gekennzeichnet, dass**
- die Abstände zwischen dem optischen Verteiler (412) und den Submodulen (1 1, 1 2, 6 n) jeweils kleiner sind als der Abstand zwischen dem optischen Verteiler (412) und der Steuereinrichtung (35) .

5. Verfahren zum Übertragen von optischen Signalen zwischen einer Steuereinrichtung (35) und Submodulen (1_1, 1_2, 6_n) eines modularen Multilevelumrichters (1), wobei die Submodule (1_1, 1_2, 6_n) jeweils mindestens zwei elektronischen Schaltelemente (202, 206) und einen elektrischen Energiespeicher (210) aufweisen, wobei
- von einem optischen Ausgang (403) der Steuereinrichtung (35) optische Steuersignale mittels eines ersten Lichtwellenleiters (406) zu einem Eingang (409) eines optischen Verteilers (412) übertragen werden,
- von einer Vielzahl von Ausgängen (415, 418, 421) des optischen Verteilers (412) die optischen Steuersignale mittels jeweils eines zweiten Lichtwellenleiters (425, 431, 437) zu einem optischen Eingang (428, 434, 440) jeweils eines der Submodule (1_1, 1_2, 6_n) übertragen werden, und
- die Steuereinrichtung (35) eine Vielzahl von optischen Eingängen (456, 465, 474) aufweist, und von einem optischen Ausgang (450, 459, 468) der Submodule (1_1, 1_2, 6_n) optische Antwortsignale jeweils mittels eines dritten Lichtwellenleiters (453, 462, 471) zu einem der optischen Eingänge (456, 465, 474) der Steuereinrichtung (35) übertragen werden, **dadurch gekennzeichnet, dass**
- die optischen Antwortsignale von dem optischen Ausgang (450, 459, 468) der Submodule (1_1, 1_2, 6_n) jeweils zu einem anderen der optischen Eingänge (456, 465, 474) der Steuereinrichtung (35) übertragen werden.

6. Verfahren nach Anspruch 5,
**dadurch gekennzeichnet, dass**
- die optischen Steuersignale von den Ausgängen (415, 418, 421) des optischen Verteilers (412) jeweils zu einem anderen der Submodule (1_1, 1_2, 6_n) übertragen werden.

7. Verfahren nach einem der Ansprüche 5 bis 6,
**dadurch gekennzeichnet, dass**
- die optischen Steuersignale von einem weiteren optischen Ausgang (480) der Steuereinrichtung (35) mittels eines weiteren Lichtwellenleiters (483) zu einem weiteren optischen Eingang (486) des optischen Verteilers (412) übertragen werden.

8. Verfahren nach einem der Ansprüche 5 bis 7,
**dadurch gekennzeichnet, dass**
- die Abstände zwischen dem optischen Verteiler (412) und den Submodulen (1_1, 1_2, 6_n) jeweils kleiner sind als der Abstand zwischen dem optischen Verteiler (412) und der Steuereinrichtung (35).

## Claims

1. Modular multilevel converter (1) having a multiplicity of submodules (1_1, 1_2, 6_n) that each have at least two electronic switching elements (202, 206) and an electrical energy store (210), and having a control device (35) for the submodules, wherein an optical output (403) of the control device (35) is connected to an input (409) of a passive optical distributor (412) by means of a first optical fibre (406), and a multiplicity of outputs (415, 418, 421) of the passive optical distributor (412) are connected to an optical input (428, 434, 440) of a respective one of the submodules (1_1, 1_2, 6_n) by means of a respective second optical fibre (425, 431, 437), and
- the control device (35) has a multiplicity of optical inputs (456, 465, 474), and an optical output (450, 459, 468) of each of the submodules (1_1, 1_2, 6_n) is connected to one of the optical inputs (456, 465, 474) of the control device (35) by means of a third optical fibre (453, 462, 471), **characterized in that**
- each of the outputs (450, 459, 468) of the submodules (1_1, 1_2, 6_n) is connected to a different one of the optical inputs (456, 465, 474) of the control device (35).

2. Modular multilevel converter according to Claim 1, **characterized in that**
- each of the outputs (415, 418, 421) of the optical distributor (412) is connected to a different one of the submodules (1_1, 1_2, 6_n).

3. Modular multilevel converter according to either of the preceding claims,
**characterized in that**
- the multilevel converter has a further optical fibre (483) that connects a further optical output (480) of the control device (35) to a further optical input (486) of the optical distributor (412).

4. Modular multilevel converter according to any one of the preceding claims,
**characterized in that**
- each of the distances between the optical distributor (412) and the submodules (1_1, 1_2, 6_n) is shorter than the distance between the optical distributor (412) and the control device (35).

5. Method for transmitting optical signals between a control device (35) and submodules (1_1, 1_2, 6_n) of a modular multilevel converter (1), wherein each of the submodules (1_1, 1_2, 6_n) has at least two electronic switching elements (202, 206) and an electrical energy store (210), wherein
- an optical output (403) of the control device (35) transmits optical control signals to an input (409) of an optical distributor (412) by means of a first optical fibre (406),
- a multiplicity of outputs (415, 418, 421) of the optical distributor (412) transmit the optical control signals to an optical input (428, 434, 440) of a respective one of the submodules (1_1, 1_2, 6_n) by means of a respective second optical fibre (425, 431, 437), and
- the control device (35) has a multiplicity of optical inputs (456, 465, 474), and an optical output (450, 459, 468) of each of the submodules (1_1, 1_2, 6_n) transmits optical response signals to one of the optical inputs (456, 465, 474) of the control device (35) by means of a third optical fibre (453, 462, 471), **characterized in that**
- each of the optical response signals from the optical output (450, 459, 468) of the submodules (1_1, 1_2, 6_n) is transmitted to a different one of the optical inputs (456, 465, 474) of the control device (35).

6. Method according to Claim 5,
**characterized in that**
- each of the optical control signals from the outputs (415, 418, 421) of the optical distributor (412) is transmitted to a different one of the submodules (1_1, 1_2, 6_n).

7. Method according to either of Claims 5 and 6,
**characterized in that**
- the optical control signals from a further optical output (480) of the control device (35) are transmitted to a further optical input (486) of the optical distributor (412) by means of a further optical fibre (483).

8. Method according to any one of Claims 5 to 7,
**characterized in that**
- each of the distances between the optical distributor (412) and the submodules (1_1, 1_2, 6_n) is shorter than the distance between the optical distributor (412) and the control device (35).

## Revendications

1. Onduleur (1) modulaire à plusieurs niveaux comprenant une pluralité de sous-modules (1_1, 1_2, 6_n), qui ont chacun au moins deux éléments (202, 206) électroniques de coupure et un accumulateur (210) d'énergie électrique, et comprenant un dispositif (35) de commande des sous-modules, dans lequel une sortie (403) optique du dispositif (35) de commande est reliée à une entrée (409) d'un répartiteur (412) optique passif au moyen d'une première fibre (406) optique et une pluralité de sorties (415, 418, 421) du répartiteur (412) optique passif sont reliées à une entrée (428, 434, 440) optique respectivement de l'un des sous-modules (1_1, 1_2, 6_n) au moyen de respectivement une deuxième fibre (425, 431, 437) optique, et
- le dispositif (35) de commande a une pluralité d'entrées (456, 465, 474) optiques et une sortie (450, 459, 468) optique des sous-modules (1_1, 1_2, 6_n) est reliée à l'une des entrées (456, 465, 474) optiques du dispositif (35) de commande respectivement au moyen d'une troisième fibre (453, 462, 471) optique, **caractérisé en ce que**
- les sorties (450, 459, 468) des sous-modules (1_1, 1_2, 6_n) sont reliées respectivement à une autre des entrées (456, 465, 474) optiques du dispositif (35) de commande.

2. Onduleur modulaire à plusieurs niveaux suivant la revendication 1,
**caractérisé en ce que**
- les sorties (415, 418, 421) du répartiteur (412) optique sont reliées respectivement à un autre des sous-modules (1_1, 1_2, 6_n),

3. Onduleur modulaire à plusieurs niveaux suivant l'une des revendications précédentes,
**caractérisé en ce que**
- l'onduleur à plusieurs niveaux a une autre fibre (483) optique, qui relie une autre sortie (480) optique du dispositif (35) de commande à une autre entrée (486) optique du répartiteur (412) optique.

4. Onduleur modulaire à plusieurs niveaux suivant l'une des revendications précédentes,
**caractérisé en ce que**
- les distances entre le répartiteur (412) optique et les sous-modules (1_1, 1_2, 6_n) sont respectivement plus petites que la distance entre le répartiteur (412) optique et le dispositif (35) de commande.

5. Procédé de transmission de signaux optiques entre un dispositif (35) de commande et des sous-modules (1_1, 1_2, 6_n) d'un onduleur (1) modulaire à plusieurs niveaux, dans lequel les sous-modules (1_1, 1_2, 6_n) ont chacun au moins deux éléments (202, 206) électroniques de coupure et un accumulateur d'énergie électrique, dans lequel
- on transmet des signaux de commande optiques d'une sortie (403) optique du dispositif (35) de commande à une entrée (409) d'un répartiteur (412) optique au moyen d'une première fibre (406) optique,
- on transmet les signaux de commande optiques d'une pluralité de sorties (415, 418, 421) du répartiteur (412) optique à une entrée (428, 434, 440) optique respectivement de l'un des sous-modules (1_1, 1_2, 6_n) au moyen de respectivement une deuxième fibre (425, 431, 437) optique, et
- le dispositif (35) de commande a une pluralité d'entrées (456, 465, 474) optiques et on transmet des signaux de réponse optiques d'une sortie (450, 459, 468) optique des sous-modules (1_1, 1_2, 6_n) à l'une des entrées (456, 465, 474) optiques du dispositif (35) de commande au moyen d'une troisième fibre (453, 462, 471) optique, **caractérisé en ce que**
- on transmet les signaux de réponse optique de la sortie (450, 459, 468) optique des sous-modules (1_1, 1_2, 6_n) respectivement à une autre des entrées (456, 465, 474) optiques du dispositif (35) de commande.

6. Procédé suivant la revendication 5,
**caractérisé en ce que**
- on transmet les signaux de commande optiques des sorties (415, 418, 421) du répartiteur (412) optique respectivement à un autre des sous-module (1_1, 1_2, 6_n).

7. Procédé suivant l'une des revendications 5 à 6,
**caractérisé en ce que**
- on transmet les signaux de commande optiques d'une autre sortie (480) optique du dispositif (35) de commande à une autre entrée (486) optique du répartiteur (412) optique au moyen d'une autre fibre (483) optique.

8. Procédé suivant l'une des revendications 5 à 7,
**caractérisé en ce que**
- les distances entre le répartiteur (421) optique et les sous-modules (1_1, 1_2, 6_n) sont respectivement plus petites que la distance entre le répartiteur (412) optique et le dispositif (35) de commande.
